(19) Europäisches Patentamt
European Patent Office
Office européen des brevets

(11) **EP 1 055 180 B1**

(12) **EUROPÄISCHE PATENTSCHRIFT**

(45) Veröffentlichungstag und Bekanntmachung des Hinweises auf die Patenterteilung:
**20.07.2011   Patentblatt 2011/29**

(21) Anmeldenummer: **99966813.0**

(22) Anmeldetag: **01.12.1999**

(51) Int Cl.:
***G06F 17/00*** *(2006.01)*

(86) Internationale Anmeldenummer:
**PCT/DE1999/003820**

(87) Internationale Veröffentlichungsnummer:
**WO 2000/033209 (08.06.2000 Gazette 2000/23)**

(54) **VERFAHREN UND ANORDNUNG ZUM ENTWURF EINES TECHNISCHEN SYSTEMS**

METHOD AND DEVICE FOR DESIGNING A TECHNICAL SYSTEM

PROCEDE ET DISPOSITIF DE CONCEPTION D'UN SYSTEME TECHNIQUE

(84) Benannte Vertragsstaaten:
**DE FR GB**

(30) Priorität: **03.12.1998   DE 19855876**

(43) Veröffentlichungstag der Anmeldung:
**29.11.2000   Patentblatt 2000/48**

(73) Patentinhaber: **SIEMENS AKTIENGESELLSCHAFT**
**80333 München (DE)**

(72) Erfinder:
 • **SCHÄFFLER, Stefan**
   **D-86199 Augsburg (DE)**
 • **STURM, Thomas**
   **D-81673 München (DE)**

(56) Entgegenhaltungen:
WO-A-92/14212    WO-A-92/21089
WO-A-98/27474    DE-U- 29 617 200
US-A- 4 358 822    US-A- 4 845 628
US-A- 5 687 077

**Beschreibung**

Die Erfindung betrifft ein Verfahren und eine Anordnung zum Entwurf eines technischen Systems.

Ein Systemverhalten eines technischen Systems, z.B. einer verfahrenstechnischen Anlage oder eines Systems der Großindustrie, hängt von zahlreichen Parametern ab. Im Rahmen eines Entwurfs solche eines Systems, also insbesondere beim Neuentwurf oder bei der Anpassung bzw. Einstellung eines bereits bestehenden Systems, sind Vorbedingungen, z.B. hinsichtlich der Wirtschaftlichkeit oder der Umweltbelastung des Systems, einzuhalten. Jede Vorbedingung wird als eine Zielfunktion formuliert, die zu optimieren im Hinblick auf die anderen Zielfunktionen allgemeines Bestreben ist.

Die US 4 358 822 offenbart ein adaptives vorhersagendes Steuerungssystem. Es wird ein adaptives vorhersagendes Steuerungssystem zur Steuerung von Prozessen mit bekannten oder unbekannten Parametern und mit oder ohne Zeitverzögerung offenbart, wobei die Prozesse einen einzelnen Eingang, einen einzelnen Ausgang aufweisen oder zeitveränderlich mit mehreren Variablen sind. Das adaptive vorhersagende Steuerungssystem dieser Offenbarung verwendet ein adaptives vorhersagendes Modell zur Bestimmung, welcher Steuerungsvektor für den Prozess angewendet werden soll, der zum Bewirken gesteuert werden soll, dass der Prozessausgang einen erwünschten Wert zu einem zukünftigen Zeitpunkt einnimmt. Die Parameter des adaptiven vorhersagenden Modells werden auf einer Echtzeitbasis in einer Weise aktualisiert, die bewirkt, dass der Ausgangsvektor, der durch das Modell vorhergesagt wird, sich dem tatsächlichen Prozessausgangsvektor annähert.

Die WO 98/27474 offenbart ein Verfahren und eine Vorrichtung zur Prozessführung einer verfahrenstechnischen Anlage. Insbesondere soll ein Rückgewinnungskessel bei der Zellstoffherstellung gesteuert und/oder geregelt werden, wobei aus den für Eingänge und Ausgänge anfallenden Prozessdaten Signale ermittelt werden. Im Einzelnen werden dazu die Rohdaten in eine Einheit zur Datenvorverarbeitung eingegeben, die aufbereiteten Daten für eine Systemidentifizierung verwendet und vom Operator die gewünschten Zielwerte der Ausgänge, insbesondere Sollwerte, eingegeben. Es wird eine Optimierungsstrategie abgeleitet, die eine Veränderung der Eingänge vorschlägt, wozu die strukturierten Daten in einen Regelprozess eingegeben werden. Bei der zugehörigen Vorrichtung ist eine zusätzliche Einrichtung zur Generierung von Signalen vorhanden. Damit wird dem Operator entsprechend dem Steuervorschlag und dem Prozessmodell eine Prädiktion angeboten. Das Prozessmodell wird aufgrund von aktuellen Prozessdaten im Sinne einer Adaption nachkorrigiert.

Die US 5 687 077 offenbart eine Vorrichtung zur anpassenden Steuerung. Dabei ist ein vorbestimmtes Modell des Prozesses der gesteuert werden soll, nicht erforderlich. Das Verfahren weist folgende Schritte auf. Einstellen eines Anfangszustandsvektors; Einstellen eines Anfangsparametervektors; Einstellen einer Anfangsvorhersage-Parameterverstärkung zwischen 2 und 10; Einstellen einer Anfangskovarianzmatrix; Ausführung einer Zustandsaktualisierung; Abschätzen des Modellfehlers; Aktualisierung des Parametervektors; Aktualisierung der Kovarianzmatrix und Aktualisierung des Steuerungsausgangs.

Die Aufgabe der Erfindung besteht darin, den Entwurf eines technischen Systems anhand von Messdaten eines vorgegebenen Systems zu ermöglichen, wobei eine gezielte Bestimmung von Messdaten ein Ersatzmodell dem vorgegebenen System mit hoher Genauigkeit annähert. Gerade im Hinblick auf eine Optimierung des bestehenden Systems bzw. auf einen optimierten Neuentwurf eines Systems ist eine derartige Nutzung bekannter Messdaten von großer Bedeutung. Insbesondere soll eine Messdatenmenge verringert sein.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zum Entwurf eines technischen Systems angegeben, bei dem Meßdaten eines vorgegebenen Systems anhand eines Ersatzmodells beschrieben werden. Es wird eine Maßzahl für die Güte des Ersatzmodells ermittelt, indem die Meßdaten des vorgegebenen Systems mit durch das Ersatzmodell bestimmten Daten verglichen werden.

Anhand der Maßzahl für die Güte wird das Ersatzmodell dahingehend angepaßt, daß es eine möglichst hohe Güte aufweist. Die Maßzahl für die Güte des Ersatzmodells wird dadurch verbessert, daß zusätzliche Meßdaten des vorgegebenen Systems ermittelt werden. Das hinsichtlich seiner Güte angepaßte Ersatzmodell wird zum Entwurf des technischen Systems eingesetzt.

Die aus vielen unterschiedlichen realisierten Systemen vorliegenden Meßdaten werden zur Beschreibung des Ersatzmodells eingesetzt. Mit dem Ersatzmodell wird versucht, das vorgegebene System möglichst gut nachzubilden. Die Maßzahl für die Güte der Nachbildung wird ermittelt, indem die realen Meßdaten mit den Daten, die anhand des Ersatzmodells gewonnen werden, verglichen werden. Eine große Differenz zwischen den Meßdaten und den Daten des Ersatzmodells entspricht einer schlechten Güte, also einer schlechten Abbildung des vorgegebenen Systems in das Ersatzmodell. Durch die Maßzahl für die Güte wird das Ersatzmodell dahingehend angepaßt, daß die Güte selbst möglichst hoch wird und somit das Ersatzmodell das vorgegebene System möglichst gut beschreibt. Gibt es einzelne Meßdaten, die von den Daten des Ersatzmodells besonders abweichen, so werden zusätzliche Meßdaten in einer vorgegebenen Umgebung dieser Meßdaten ermittelt, so daß eine genauere Anpassung (und damit eine weitere Erhöhung der Güte) des Ersatzmodells an das vorgegebene System erfolgen kann. Das so gewonnene Ersatzmodell mit hoher Güte wird zum Entwurf des technischen Systems eingesetzt.

Unter Entwurf werden allgemein verstanden sowohl der Neuentwurf eines technischen Systems als auch die Anpassung bzw. Adaption eines bereits vorhandenen technischen Systems.

Zur Verringerung der Messdatenmenge werden die Messdaten nach deren Güte, bezogen auf deren Abweichung von den durch das Ersatzmodell bestimmten Daten, sortiert und eine vorgegebene Anzahl von n% schlechtesten Messdaten aussortiert. Es wird also eine Güte für jedes Meßdatum bestimmt, wobei die Menge der Meßdaten, vorzugsweise in Form einer Liste, nach ihrer Güte sortiert und die n% schlechtesten bzw. die n schlechtesten Meßdaten aussortiert werden.

Eine Weiterbildung besteht darin, daß das Ersatzmodell ein Regressionsmodell ist. Das Regressionsmodell geht von der Beschreibung

$$y_i = f_\beta(x_i) + e_i$$

aus, wobei

$(y_i, x_i)$     vorgegebene Wertepaare,
$f_\beta$     eine Funktion, die von einem Parameter $\beta$ abhängt und
$e_i$     einen Fehler

bezeichnen.

Nun ist der Fehler (als Funktion von $\beta$) zu minimieren:

$$\sum_{i=1}^{n} e_i^2 = \varphi(\beta).$$

Geht man von folgendem Beispiel

$$y = \beta_0 + \beta_1 x + \beta_2 x^2 + e$$

aus, so ist der funktionale Zusammenhang quadratischer Ordnung, das Regressionsmodell (Funktion, abhängig von $\beta$) hingegen ist linear.

Eine zusätzliche Erhöhung der Güte des Ersatzmodells wird dadurch erreicht, daß mindestens ein Teilbereich des Ersatzmodells lokal angepaßt wird. Hierbei erfolgt eine Anpassung des Ersatzmodells durch zusätzliche (lokale) Ermittlung von Meßwerten, die zur genaueren Anpassung des Ersatzmodells an das vorgegebene System herangezogen werden.

Die Güte kann in einer anderen Weiterbildung anhand einer quadratischen Abweichung der Meßdaten von den durch das Ersatzmodell bestimmten Daten ermittelt werden. Die Anpassung des Ersatzmodells erfolgt durch Minimierung der quadratischen Abweichung.

Eine andere Weiterbildung besteht darin, daß die Meßdaten einer Vorverarbeitung unterzogen werden. Da in einem realen vorgegebenes System eine große Menge an Meßdaten pro Zeiteinheit anfallen, ist es sinnvoll, diese Meßdaten einer Vorverarbeitung zu unterziehen und somit zu gewährleisten, daß weitgehend signifikante Meßdaten in die Bildung des Ersatzmodells einfließen. Bevorzugt findet die Vorverarbeitung in einer Reduktion der Anzahl von Meßdaten ihre Ausprägung.

Dabei werden die Meßdaten entsprechend vorgegebener Kriterien in Klassen eingeteilt. Die Meßwerte einer Klasse werden bewertet und diejenigen Meßwerte, deren Bewertung unterhalb eines vorgegebenen ersten Schwellwertes liegt, werden aussortiert. Durch die Aussortierung der Meßwerte ergibt sich eine Reduktion hinsichtlich der Anzahl der Meßwerte. Somit liegen für eine Weiterverarbeitung eine deutlich reduzierte Anzahl von Meßwerten vor. Die Weiterverarbeitung kann mit gegenüber der nicht reduzierten Anzahl von Meßwerten geringerem Rechenaufwand erfolgen.

Auch können die Klassen selbst bewertet werden. Insbesondere kann eine Klasse, deren Bewertung unterhalb eines vorgegebenen zweiten Schwellwerts liegt, aussortiert werden. Hierdurch ergibt sich eine zusätzliche Reduktion der Anzahl der Meßwerte.

Eine andere Weiterbildung der Vorverarbeitung besteht darin, daß ein Kriterium für die Klasseneinteilung darin besteht, daß pro Klasse Meßwerte zu einer Vorgabe von Einstellparametern des technischen Systems bestimmt werden. Typischerweise wird das technische System anhand einer vorgegebenen Anzahl von Einstellparametern eingestellt, nach Einstellung erfolgt eine (zumeist zeitverzögerte) Reaktion des Systems auf die Einstellparameter (Einschwingverhalten, Einschwingvorgang des Systems) Nach Einstellung werden somit eine bestimmte Menge an Meßwerten aufgenommen, die dem Einschwingvorgang zugeordnet werden können, wobei nach abgeschlossenem Einschwingvorgang (Übergang in den stationären Betrieb) weiterhin Meßwerte anfallen, die dem vorgegebenen Satz Einstellparameter zugeordnet werden. Durch Verstellung der Einstellparameter wird eine neue Klasse bestimmt. Alle Meßwerte, die jeweils nach einer Verstellung der Einstellparameter anfallen, gehören in eine eigene Klasse.

Zusätzlich können Meßwerte einer Klasse, die dem jeweiligen Einschwingvorgang zuordenbar sind, aussortiert werden. Weiterhin können fehlerhafte Meßwerte aussortiert werden. Die Einstellung großer technischer Systeme ist in vielen Fällen auf eine langfristigen stationären Betrieb ausgerichtet. Meßwerte, die sich auf den Einschwingvorgang (von kurzer Dauer im Verhältnis zum stationären Betrieb nach abgeschlossenem Einschwingvorgang) beziehen, werden sinnvoll aussortiert, da durch sie Meßwerte für den stationären Betrieb verfälscht werden. Insbesondere im Rahmen einer Modellierung des technischen Systems, sind die Meßdaten des stationären Verhaltens des technischen Systems interessant.

Eine Ausgestaltung besteht darin, die Anzahl der Meßwerte in einer Klasse dadurch zu reduzieren, daß mindestens ein repräsentativer Wert für die Meßwerte der Klasse bestimmt wird. Solch ein repräsentativer Wert kann sein:

a) ein Mittelwert (z.B. ein gleitender Mittelwert) der Meßwerte der Klasse,
b) ein Maximalwert der Meßwerte der Klasse,
c) ein Minimalwert der Meßwerte der Klasse,
d) ein Median.

Bei Variante d) liegt ein Vorteil darin, daß immer ein Wert bestimmbar ist, den es tatsächlich gibt, wohingegen der Mittelwert a) selbst nicht als Wert vorkommt.

Je nach Anwendungsfall, kann eine geeignete Wahl zur Bestimmung des repräsentativen Werts einer Klasse erfolgen.

Eine ganze Klasse mit Meßwerten kann aussortiert werden, wenn diese weniger als eine vorgegebene Anzahl Meßwerte enthält.

Eine andere Ausgestaltung besteht darin, daß diejenigen Meßwerte aussortiert werden, die um mehr als einen vorgegebenen Schwellwert von einem vorgebbaren Wert verschieden sind. Der vorgebbare Wert kann ein Mittelwert aller Meßwerte der Klasse oder ein zu erwartender Meßwert auf die jeweiligen Einstellparameter des technischen Systems sein.

Im Rahmen einer anderen Weiterbildung werden mittels Entwurf gewonnene Daten zu einer Steuerung des technischen Systems eingesetzt. Zusätzlich kann die Steuerung des technischen Systems zur Laufzeit des Systems, also Online, erfolgen.

Auch wird zur Lösung der Aufgabe eine Anordnung zum Entwurf eines technischen Systems angegeben, die eine Prozessoreinheit aufweist, welche Prozessoreinheit derart eingerichtet ist, daß Meßdaten eines vorgegebenen Systems anhand eines Ersatzmodells beschreibbar sind. Eine Maßzahl für die Güte des Ersatzmodells ist ermittelbar, indem die Meßdaten des vorgegebenen Systems mit durch das Ersatzmodell bestimmten Daten verglichen werden. Aus der Maßzahl für die Güte ist das Ersatzmodell dahingehend anpaßbar, daß es eine möglichst hohe Güte aufweist. Die Maßzahl für die Güte des Ersatzmodells ist weiter verbesserbar, indem zusätzlich Meßdaten des vorgegebenen Systems ermittelt werden. Das hinsichtlich seiner Güte angepaßte Ersatzmodell ist zum Entwurf des technischen Systems einsetzbar.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigen

Fig.1    ein Blockdiagramm, das Schritte eines Verfahrens zum Entwurf eines technischen Systems enthält;

Fig.2    eine schematische Skizze eines Recovery-Boilers;

Fig.3-5    Eingangsgrößen, Stellgrößen und Ausgangsgrößen des Recovery-Boilers.

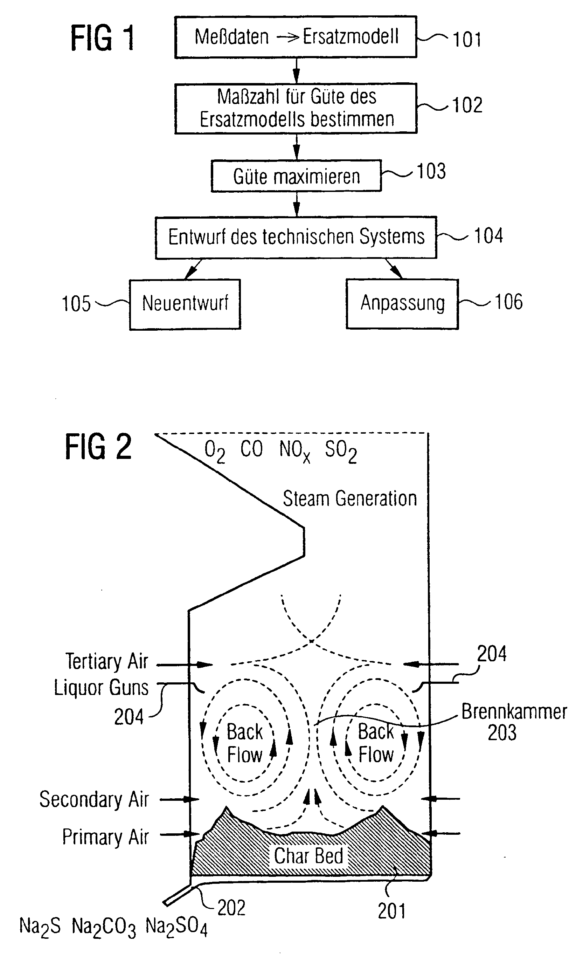

In **Fig.1** ist ein Blockdiagramm dargestellt, das Schritte eines Verfahrens zum Entwurf eines technischen Systems enthält. In einem Schritt 101 wird anhand von Meßdaten ein Ersatzmodell gebildet. Bevorzugt ist dieses Ersatzmodell ein Regressionsmodell. Dann sind bei einer quadratischen Funktion f die erste und die zweite Ableitung unmittelbar gegeben. Um das in Schritt 101 entstandene Ersatzmodell auf die Meßdaten anzupassen, also eine Verfeinerung des Ersatzmodells vorzunehmen, so daß die Meßdaten das Ersatzmodell in ausreichender Näherung beschreiben, wird in einem Schritt 102 eine Maßzahl für die Güte des Ersatzmodells bestimmt. Diese Maßzahl wird bestimmt, indem die Meßdaten des vorgegebenen Systems mit durch das Ersatzmodell bestimmten Daten verglichen werden. Bevorzugt erhält jedes Meßdatum eine Maßzahl für die Güte, welche Maßzahl die Abweichung des Meßdatums mit dem zugehörigen von dem Ersatzmodell bestimmten Wert kennzeichnet. Die Summe aller Maßzahlen für die Güte für alle Meßdaten bestimmt eine Gesamtgüte für das Ersatzmodell. In einem Schritt 103 wird die Güte maximiert, indem die Maßzahl für die Güte maximiert wird. Zusätzlich wird das Ersatzmodell verfeinert, also die Güte der Übereinstimmung des Ersatzmodells mit dem vorgegebenen System erhöht, indem gezielt Meßdaten an den Stellen bestimmt werden und in die Bildung des Ersatzmodells einfließen, an denen eine große Abweichung zwischen Meßdaten und durch das Ersatzmodell bestimmten Daten besteht. Ist eine entsprechend hohe Güte für das Ersatzmodell bestimmt, so wird in einem Schritt 104 dieses Ersatzmodell für den Entwurf des technischen Systems eingesetzt. Der Entwurf kann sowohl ein Neuentwurf (vgl. Schritt 105) oder eine Anpassung eines schon bestehenden technischen Systems (vgl. Schritt 106) sein.

**Fig.2** zeigt eine schematische Skizze eines Recovery-Boilers. Nachfolgend wird anhand des Beispiels "Recovery-Boiler" ein Ausführungsbeispiel des oben beschriebenen Verfahrens veranschaulicht.

In der Papier- und Zellstoffindustrie werden zum Aufschluß von Zellstoff verschiedene Chemikalien sowie Wärme und Elektroenergie benötigt. Aus einer eingedeckten Prozeßablauge (Schwarzlauge) lassen sich mit Hilfe des Recovery-Boilers die verwendeten Chemikalien und zusätzlich Wärmeenergie zurückgewinnen. Ein Grad für die Zurückgewinnung der Chemikalien ist von entscheidender Bedeutung für die Wirtschaftlichkeit der Gesamtanlage.

Die Schwarzlauge wird in einem Schmelzbett 201 verbrannt. Dabei bildet sich eine Alkalischmelze, die über eine Leitung 202 abfließt. Aus den Bestandteilen der Alkalischmelze werden in weiteren Verfahrensschritten die eingesetzten Chemikalien zurückgewonnen. Frei gewordene Verbrennungswärme wird zur Erzeugung von Wasserdampf genutzt. Die Verbrennung der Ablauge und damit die Rückgewinnung der Chemikalien beginnt mit der Zerstäubung der Schwarzlauge über Zerstäuberdüsen 204 in eine Brennkammer 203. Partikel der zerstäubten Schwarzlauge werden bei ihrem Fall durch das heiße Rauchgas getrocknet. Die getrockneten Laugenpartikel fallen auf das Schmelzbett 201, wobei eine erste Verbrennung und eine chemische Reduktion stattfinden. Flüchtige Bestandteile und Reaktionsprodukte gelangen in eine Oxidationszone, in der oxidierende Reaktionen ablaufen und in der die Verbrennung abgeschlossen wird.

Wichtige Zielvorgaben für die Steuerung des Recovery-Boilers sind die Dampfproduktion zur Energiegewinnung, die Einhaltung von Emissionswerten unter Umweltgesichtspunkten und die Effizienz der chemischen Reduktion.

Der Verbrennungsvorgang, und damit die Zielvorgaben, werden insbesondere durch die Luftzufuhr in drei Ebenen (Primary Air (PA), Secondary Air (SA), Tertiary Air (TA)) gesteuert. Der Gesamtprozeß unterliegt zahlreichen Einflüssen, die bei der Modellierung zu berücksichtigen sind:

a) Die Messung der Größen unterliegen oftmals starken Schwankungen;

b) Es existieren nicht gemessene und nicht meßbare Einflußgrößen;

c) Bei jeder Änderung der einstellbaren Parameter kommt es zu Einschwingvorgängen;

d) Die technische Anlage verschmutzt und wird in vorgegebenen Abständen gereinigt, wodurch im Systemverhalten jeweils ein zeitlicher Drift bewirkt wird.

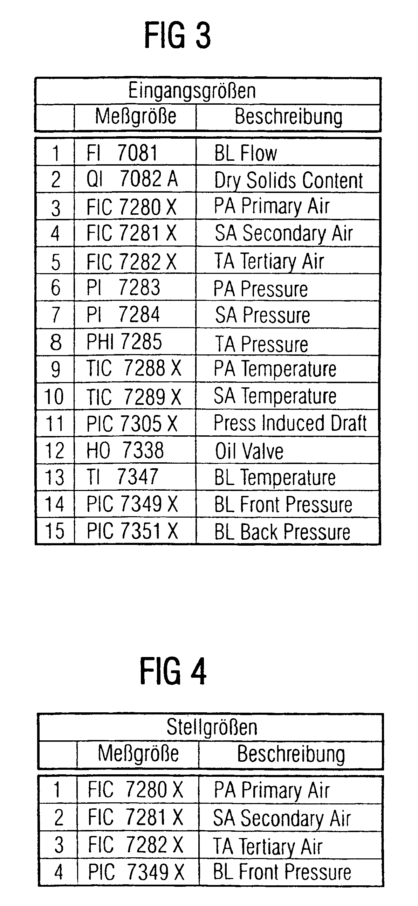

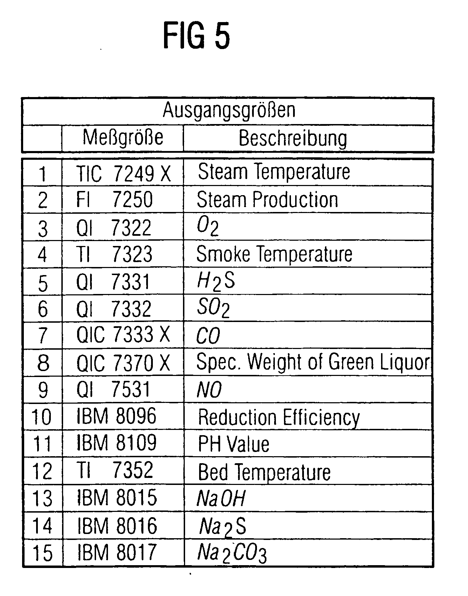

Die gemessenen Größen des Gesamtprozesses werden in Eingangsgrößen (vgl. **Fig.3)** und Ausgangsgrößen (vgl. **Fig.5)** unterteilt. Jede Minute werden Meßwerte abgespeichert. Vier der Eingangsgrößen sind gleichzeitig auch Stellgrößen (auch: einstellbare Parameter; vgl. **Fig.4).** Die Stellgrößen sind im wesentlichen als unabhängig voneinander einstellbare freie Parameter des Gesamtprozesses anzusehen. Einige der anderen Eingangsgrößen sind von den Stellgrößen mehr oder minder abhängig. Gemäß einer Vorgabe sind beim Recovery-Boiler die Größen "BL Front Pressure" und "BL Back Pressure" stets gleich zu regeln. Die vier Stellgrößen (vgl. Fig.4) sind vorzugsweise abzuspeichern als Stellgrößen (mit dem gewünschten, voreingestellten Wert) und als Eingangsgrößen (mit dem gemessenen, realen Wert).

Beim Recovery-Boiler besteht eine Problemstellung darin, in Abhängigkeit von den einstellbaren Parametern bestimmte Zielvorgaben, die über gemessene Größen definiert werden, zu erfüllen. Hier wird eine dreistufige Vorgehensweise zur Lösung des Problems gewählt:

1. Die zu betrachtenden Zielvorgaben werden durch stochastische Methoden modelliert, wobei diese Modelle durch neue Messungen aktualisiert werden (datengetriebene, empirische Modellierung). Dabei ist es sinnvoll, nicht nur ein einziges Modell zu verwenden, sondern globale Modelle für die Identifikation interessanter Gebiete in einem durch die Zielvorgaben bestimmten Parameterraum und lokale Modelle zur exakten Berechnung optimaler Arbeitspunkte einzusetzen. Die verwendeten Modelle werden durch Gütemaße bewertet.

2. Falls die betrachteten Modelle aufgrund der Datenlage nicht hinreichend genau sind (Gütemaße), werden gezielt neue Arbeitspunkte zur Modellverbesserung ausgewertet (Experimental Design). Ferner werden durch Verwendung globaler stochastischer Optimierungsverfahren bzgl. der Zielvorgaben attraktive Gebiete in Abhängigkeit vom aktuellen globalen Modell identifiziert.

3. Für die lokale Optimierung werden lokale Modelle konstruiert und die zur Verfügung stehenden Datensätze gegebenenfalls gezielt erweitert (Experimental Design).

Bei den Zielvorgaben handelt es sich um physikalischtechnische bzw. betriebswirtschaftliche Kriterien, die in der Regel Randbedingungen und/oder Sicherheitsbedingungen entsprechen müssen. Häufig sind mehrere dieser Kriterien gleichzeitig zu betrachten. Die Verwendung eines stochastischen Modells kann insbesondere dazu verwendet werden, die zu optimierenden Zielgrößen und ihre Abhängigkeit von den einzustellenden Parametern im Rechner zu simulieren. Dies ist dann notwendig, wenn Messungen sehr kostenintensiv bzw. sehr zeitaufwendig sind. Bei Sicherheitsanforderungen können mögliche Gefahrensituationen vermieden werden.

Beim Recovery-Boiler ist eine Online-Optimierung, die auf mehreren Daten basiert, notwendig, weil die physikalischchemischen Prozesse nicht mit ausreichender Genauigkeit quantitativ modelliert werden können und weil das Verhalten der Anlage im Verlauf des Betriebs Schwankungen unterliegt. Das Wissen über dieses Verhalten muß stetig durch gezielte Wahl neuer Arbeitspunkte erweitert werden. Daher empfiehlt sich im Rahmen der Online-Optimierung das bereits beschriebene dreistufige Vorgehen der stochastischen Modellierung und der mathematischen Optimierung.

BESCHREIBUNG DER EINGANGSGRÖSSEN

Die a Eingangsgrößen ($a \in \mathbf{N}$, $\mathbf{N}$: Menge der natürlichen Zahlen) sind im allgemeinen von n Stellgrößen $n \in \mathbf{N}$ und von Zufallseffekten abhängig. Sie können wie folgt beschrieben werden:

Es seien $(\Omega, \mathbf{S}, \mathbf{P})$ ein Wahrscheinlichkeitsraum und $B^v$ eine Borelsche $\sigma$-Algebra über $\mathbf{R}^v$ ($\mathbf{R}$: Menge der reellen Zahlen) für jedes $v \in \mathbf{N}$. Die Eingangsgrößen werden über eine $B^n \times S$ - $B^a$-meßbare Abbildung $\varphi$ dargestellt:

$$\varphi : \mathbf{R}^n \times \Omega \to \mathbf{R}^a \qquad\qquad (1).$$

Die Definitionsmenge der Abbildung $\varphi$ ist ein kartesisches Produkt zweier Mengen. Betrachtet man die jeweiligen Projektionen auf die Einzelmengen, so erhält man folgende Abbildungen:

$$\varphi_x: \Omega \to \mathbf{R}^a, \ \omega \to \varphi(x, \omega) \quad \text{für alle } x \in \mathbf{R}^n \qquad (2),$$

$$\varphi^\omega: \mathbf{R}^n \to \mathbf{R}^a, \ x \to \varphi(x, \omega) \quad \text{für alle } \omega \in \Omega \qquad (3).$$

$\{\varphi_x; x \in \mathbf{R}^n\}$ ist ein stochastischer Prozeß mit einer Indexmenge $\mathbf{R}^n$ und eine Abbildung $\varphi^\omega$ ist für jedes Ereignis $\omega \in \Omega$ ein Pfad dieses stochastischen Prozesses.

Beim Recovery-Boiler ist n=4 und a=14 (nach Elimination der Größe "BL Back Pressure").

Aufgrund der geforderten Meßbarkeit der Abbildung $\varphi_x$ ist für jedes $x \in \mathbf{R}^n$ die Abbildung $\varphi_x$ eine Zufallsvariable.

Unter geeigneten Zusatzvoraussetzungen können Erwartungswerte und höhere Momente betrachtet werden. Dieser Zugang ermöglicht den Schritt von stochastischen Modellen zu deterministischen Optimierungsproblemen. Bei einem deterministischen Optimierungsproblem ist die Zielfunktion direkt mittels einer Variablen einstellbar, wohingegen die stochastische Größe die Zielfunktion beeinflußt, aber keine gezielte Einstellung ermöglicht.

BESCHREIBUNG DER AUSGANGSGRÖßEN

Das Prozeßmodell M des Recovery-Boilers wird als Funktion in Abhängigkeit von den Eingangsgrößen und weiteren Zufallseffekten beschrieben. Dabei sei $(\Omega, S, P)$ der obige Wahrscheinlichkeitsraum. Das Prozeßmodell M ist dann eine $B^a \times S$ - $B^b$ -meßbare Abbildung:

$$M : \mathbf{R}^a \times \Omega \rightarrow \mathbf{R}^b \qquad (4),$$

wobei b die Anzahl der Ausgangsgrößen bezeichnet.

Da der Recovery-Boiler einem zyklischen zeitlichen Drift unterliegt (von Reinigungsphase zu Reinigungsphase), ist zudem eine Beschreibung mit einem Zeitparameter denkbar. Die Ausgangsgrößen lassen sich durch $B^n \times S$ - $B^b$-meßbare Abbildungen $\psi$ darstellen:

$$\psi : \mathbf{R}^n \times \Omega \rightarrow \mathbf{R}^b \qquad (5),$$

$$(x, \omega) \rightarrow M\big(\varphi(x, \omega), \omega\big) \qquad (6).$$

Betrachtet man die jeweiligen Projektionen auf die Einzelmengen der Definitionsmenge, so erhält man folgende Abbildungen

$$\psi_x : \Omega \rightarrow \mathbf{R}^b, \ \omega \rightarrow \psi(x, \omega) \quad \text{für alle } x \in \mathbf{R}^n \qquad (7),$$

$$\psi^\omega : \mathbf{R}^n \rightarrow \mathbf{R}^b, \ x \rightarrow \psi(x, \omega) \quad \text{für alle } \omega \in \Omega \qquad (8).$$

$\{\psi_x; x \in \mathbf{R}^n\}$ ist ein stochastischer Prozeß mit einer Indexmenge $\mathbf{R}^n$ und die Abbildung $\psi^\omega$ ist für jedes $\omega \in \Omega$ ein Pfad dieses stochastischen Prozesses.

Beim Recovery-Boiler ist b=15.

Die Tatsache, daß bei der Definition von $\psi$ zwischen den verwendeten Ereignissen $\omega$ nicht unterschieden wird, bedeutet keine Einschränkung, da $\Omega$ als kartesisches Produkt aus einem $\Omega_1$ und einem $\Omega_2$ dargestellt werden kann. Die obige Darstellung umfaßt somit auch das Modell:

$$\psi : \mathbf{R}^n \times \Omega_1 \times \Omega_2 \rightarrow \mathbf{R}^b \qquad (9),$$

$$\left(x, \omega_1, \omega_2\right) \;\rightarrow\; M\!\left(\varphi\!\left(x, \omega_1\right), \omega_2\right) \qquad\qquad (10).$$

BESCHREIBUNG DER ZUR VERFÜGUNG STEHENDEN DATENSÄTZE

Mit den Beschreibungen in den beiden vorangegangenen Abschnitten kann man die Eingangsgrößen und die Ausgangsgrößen gemeinsam zu Meßgrößen (=Meßdaten) $\Phi$ zusammenfassen. $\Phi$ ist eine $B^n \times S$ - $B^m$-meßbare Abbildung mit m = a + b und

$$\Phi : \mathbf{R}^n \times \Omega \;\rightarrow\; \mathbf{R}^m \qquad\qquad (11),$$

$$\left(x, \omega\right) \;\rightarrow\; \begin{pmatrix} \varphi\!\left(x, \omega\right) \\ \psi\!\left(x, \omega\right) \end{pmatrix} \qquad\qquad (12).$$

Betrachtet man wieder die jeweiligen Projektionen auf die Einzelmengen der Definitionsmenge, so erhält man folgende Abbildungen:

$$\Phi_x : \Omega \;\rightarrow\; \mathbf{R}^m, \; \omega \;\rightarrow\; \Phi(x, \omega) \qquad \text{für alle } x \in \mathbf{R}^n \qquad\qquad (13),$$

$$\Phi^{\omega} : \mathbf{R}^n \;\rightarrow\; \mathbf{R}^m, \; x \;\rightarrow\; \Phi(x, \omega) \qquad \text{für alle } \omega \in \Omega \qquad\qquad (14).$$

$\{\Phi_x; x \in R^n\}$ ist ein stochastischer Prozeß mit einer Indexmenge $\mathbf{R}^n$ und die Abbildung $\Phi^{\omega}$ ist für jedes $\omega \in \Omega$ ein Pfad dieses stochastischen Prozesses.

Für jedes gewählte Stellgrößentupel x werden beim Recovery-Boiler viele Realisierungen von $\Phi_x$ ermittelt und abgespeichert, d.h. zu jedem $x_j \in \mathbf{R}^n$ werden zahlreiche Realisierungen

$$\Phi_{jk} := \Phi\!\left(x_j, \omega_{jk}\right) \qquad\qquad (15)$$

mit $\omega_{jk} \in \Omega$ ; k = 1,2,...,$v_j$;
$v_j \in \mathbf{N}$; j = 1,2,...,u; u $\in \mathbf{N}$

betrachtet. Die gespeicherten Datensätze $D_{jk}$ des Recovery-Boilers sind also (n + m)-Tupel:

$$D_{jk} = \begin{pmatrix} x_j \\ \Phi_{jk} \end{pmatrix}, \qquad k = 1,2,\ldots, v_j; \; j = 1,2,\ldots, u \qquad\qquad (16).$$

Dabei wird $D_{j_1k_1}$ vor $D_{j_2k_2}$ abgespeichert, wenn

$$\left(j_1 < j_2\right) \vee \left(\left(j_1 = j_2\right) \wedge \left(k_1 < k_2\right)\right)$$

gilt.

DATENKOMPRESSION DURCH KLASSENEINTEILUNG DER PARAMETER

Da für jedes Stellgrößentupel x im allgemeinen mehrere Realisierungen von $\Phi_x$ vorliegen, bietet sich aufgrund der komplexen stochastischen Eigenschaften des zu betrachtenden Prozesses als erster Schritt der statistischen Datenanalyse eine Klasseneinteilung der Parameter durch Bildung arithmetischer Mittelwerte an. Zudem werden offensichtlich fehlerhafte Datensätze ausgesondert. Ein offensichtlich fehlerhafter Datensatz ist bspw. eine physikalisch unmögliche Messung, der insbesondere aufgrund einer vorgenommenen Einstellung real gar nicht vorkommen kann.

Vorgehensweise:

1. Datensätze, bei denen die Größe "BL Front Pressure" ungleich der Größe "BL Back Pressure" ist, werden aussortiert, da diese beiden Werte nach Vorgabe der Anlagensteuerung gleich sein müssen. Der Datenverlust ist sehr gering.

2. Die Datensätze werden auf Klassen aufgeteilt, in denen die vier Einstellparameter (PA, SA, TA, BL Front Pressure, siehe oben) zeitlich aufeinanderfolgend konstant sind, d.h. die j-te Klasse besteht aus den Datensätzen $D_j$•

3. Klassen, in denen sich weniger als 30 Datensätze befinden, werden ausgesondert, damit Einschwingvorgänge keinen großen Einfluß haben.

4. Für jede Klasse werden ein arithmetischer Mittelwert $\Phi_j$ und eine empirische Standardabweichung $s_j$ für alle Meßgrößen ermittelt:

$$\overline{\Phi}_j = \frac{1}{v_j} \cdot \sum_{k=1}^{v_j} \Phi_{jk} \qquad (17),$$

$$s_j = \left( \begin{array}{c} \left( \frac{1}{v_j - 1} \cdot \sum_{k=1}^{v_j} \left( \Phi_{jk}^{(1)} - \overline{\Phi}_j^{(1)} \right)^2 \right)^{\frac{1}{2}} \\ \vdots \\ \left( \frac{1}{v_j - 1} \cdot \sum_{k=1}^{v_j} \left( \Phi_{jk}^{(m)} - \overline{\Phi}_j^{(m)} \right)^2 \right)^{\frac{1}{2}} \end{array} \right) \qquad (18).$$

5. Klassen bei denen die Mittelwerte für die Größen PA, SA, TA oder BL Front Pressure zu weit von den entsprechenden Einstellparametern entfernt sind, werden ausgesondert. Auf diesen Klassen konnten also die Einstellwerte nicht erreicht werden.

STATISTISCHE KENNGRÖßEN FÜR DIE GEGEBENEN KLASSEN UND IHRE GRAPHISCHE DARSTELLUNG

Neben den arithmetischen Mittelwerten und den empirischen Standardabweichungen, die für die einzelnen Klassen bestimmt wurden, wird noch eine gemeinsame Standardabweichung s bestimmt gemäß

$$s = \left( \begin{array}{c} \left( \dfrac{1}{v-1} \cdot \displaystyle\sum_{j=1}^{u} \left(v_j - 1\right)s_j^{(1)2} \right)^{\frac{1}{2}} \\ \vdots \\ \left( \dfrac{1}{v-1} \cdot \displaystyle\sum_{j=1}^{u} \left(v_j - 1\right)s_j^{(m)2} \right)^{\frac{1}{2}} \end{array} \right) \qquad (19)$$

Dabei steht u für die Anzahl der Klassen (hier 205) und v für die Summe der $v_j$, d.h. v ist die Anzahl aller verwendeten Meßwerte (hier 38915).

LINEARE REGRESSIONSMODELLE FÜR FUNKTIONSAPPROXIMATIONEN

Für jede Meßgröße (Meßdatum) $\Phi^{(i)}$ (i=1,2,...,m) wird, basierend auf dem arithmetischen Mittel über die Klassen, ein lineares Regressionsmodell in Abhängigkeit von der quadratischen Kombination der vier Einstellparameter berechnet. In der folgenden Darstellung ist $x \in R^4$, wobei

   $x^{(1)}$ : Primary Air (PA)
   $x^{(2)}$ : Secondary Air (SA)
   $x^{(3)}$ Tertiary Air (TA)
   $x^{(4)}$ : Black Liquor (BL) Front Pressure

gilt. $u \in \mathbf{N}$ bezeichnet die Anzahl der Klassen. Jede Meßgröße $\Phi^{(i)}$ wird durch

$$\Phi^{(i)}(x, \omega) = a_i^T r(x) + e_i(\omega) \qquad (20)$$

mit $a_i \in R^{15}$ modelliert. Dabei gelten

$$r : \mathbf{R}^4 \rightarrow \mathbf{R}^{15} \qquad (21)$$

$$(\zeta_1, \zeta_2, \zeta_3, \zeta_4)^T \rightarrow (1, \zeta_1, \zeta_2, \zeta_3, \zeta_4, \zeta_1^2, \zeta_2^2, \zeta_3^2, \zeta_4^2,$$
$$\zeta_1\zeta_2, \zeta_1\zeta_3, \zeta_1\zeta_4, \zeta_2\zeta_3, \zeta_2\zeta_4, \zeta_3\zeta_4)^T \qquad (22),$$

d.h. Polynome zweiten Grades werden an die Meßdaten angepaßt, und

$$e_i : \Omega \rightarrow \mathbb{R} \tag{23}$$

ist eine Zufallsvariable mit Erwartungswert 0.

Der Vektor ai wird mit der Methode der kleinsten Fehlerquadrate bestimmt, allerdings werden statt der Originaldatensätze $\left( x_j, \Phi_{jk}^{(i)} \right)^T$ die arithmetischen Mittel $\left( x_j, \overline{\Phi}_j^{(i)} \right)^T$ verwendet. Diese Vorgehensweise eignet sich, da durch lineare Regressionsmodelle insbesondere Erwartungswerte geschätzt werden. Somit erhält man das Minimierungsproblem:

$$\min_{a_i \in \mathbb{R}^{15}} \left\{ \left\| \begin{pmatrix} \overline{\Phi}_1^{(i)} \\ \vdots \\ \overline{\Phi}_u^{(i)} \end{pmatrix} - \begin{pmatrix} r(x_1)^T \\ \vdots \\ r(x_u)^T \end{pmatrix} \cdot \begin{pmatrix} a_i^{(1)} \\ \vdots \\ a_i^{(15)} \end{pmatrix} \right\|_2^2 \right\} \tag{24}.$$

Es sei $\overline{a}_i$ der optimale Punkt des quadratischen Minimierungsproblems aus Gleichung (24). Ferner gelte:

$$\hat{y}_i := \begin{pmatrix} r(x_1)^T \\ \vdots \\ r(x_u)^T \end{pmatrix} \cdot \begin{pmatrix} \overline{a}_i^{(1)} \\ \vdots \\ \overline{a}_i^{(15)} \end{pmatrix} \in \mathbb{R}^u \tag{25},$$

$$\overline{y}_i := \frac{1}{u} \cdot \sum_{j=1}^{u} \overline{\Phi}_j^{(i)} \in \mathbb{R} \tag{26}.$$

Zur Validierung des Regressionsansatzes wird ein Bestimmtheitsmaß $R^2$ berechnet gemäß

$$R^2 := \frac{\sum_{j=1}^{u} \left( \hat{y}_i^{(j)} - \overline{y}_i \right)^2}{\sum_{j=1}^{u} \left( \overline{\Phi}_j^{(i)} - \overline{y}_i \right)^2} = \frac{\hat{y}_i^T \hat{y}_i - u\overline{y}_i^2}{\overline{\Phi}^{(i)T} \overline{\Phi}^{(i)} - u\overline{y}_i^2} \tag{27}$$

mit

$$\overline{\Phi}^{(i)} = \begin{pmatrix} \overline{\Phi}_1^{(i)} \\ \vdots \\ \overline{\Phi}_u^{(i)} \end{pmatrix} \qquad (28).$$

Je näher $R^2_i$ bei 1 liegt, desto besser wird die abhängige Variable durch die unabhängigen Variablen dargestellt

$$\left(0 \leq R_i^2 \leq 1\right).$$

Zusätzlich wird ein Maximum $E^{(i)}_{max}$ für einen Absolutwertes der Abweichung der Daten vom Modell angegeben als

$$E^{(i)}_{max} := \max_{j=1,\ldots,u} \left\{ \left\| \overline{\Phi}_j^{(i)} - \hat{y}_i^{(j)} \right\| \right\} \qquad (29).$$

$E^{(i)}_{90\%}$ ist derjenige Wert, unterhalb dessen mindestens 90% der Absolutwerte der Abweichungen der Daten vom Modell liegen.

Analog dazu ist $E^{(i)}_{80\%}$ derjenige Wert, unterhalb dessen mindestens 80% der Absolutwerte der Abweichungen der Daten vom Modell liegen. Mit dem optimalen Punkt $\overline{a}_i$ des Minimierungsproblems gemäß Gleichung (24) läßt sich ein Modell $\tilde{\Phi}^{(i)}$ des Erwartungswertes der Meßgröße $\Phi^{(i)}$ angeben zu

$$\tilde{\Phi}^{(i)} := R^n \to R \qquad (30),$$

$$x \to \overline{a}_i^T r(x) \qquad (31).$$

Insbesondere läßt sich der Gradient $\nabla\tilde{\Phi}^{(i)}$ analytisch angeben mit

$$\nabla\tilde{\Phi}^{(i)}(x) = \frac{dr}{dx}(x) \cdot \overline{a}_i \quad \text{für alle } x \in R^n \qquad (32).$$

OPTIMIERUNGSKONZEPTE UND DATENGETRIEBENE MODELLANPASSUNG

ALLGEMEINE VORGEHENSWEISE

Die Steuerung des Recovery-Boilers erfolgt durch einen Anlagen-Operator. Aufgrund von Vorgaben des Anlagen-Operators, ergibt sich eine Funktion

$$F : R^n \times \Omega \to R \qquad (33),$$

$$(x, \omega) \rightarrow g\big(\Phi(x, \omega), x\big) \qquad (34).$$

In die Wahl der Funktion

$$g : \mathbf{R}^m \times \mathbf{R}^n \rightarrow \mathbf{R} \qquad (35),$$

$$(\eta, x) \rightarrow g(\eta, x) \qquad (36)$$

gehen die Vorgaben des Anlagen-Operators ein. Ein Ziel besteht in der globalen Minimierung des Erwartungswertes der Funktion F. Aufgrund der stochastischen Komplexität des beschriebenen Problems bietet sich eine dreistufige approximative Vorgehensweise an:

1. Mit Hilfe der oben dargestellten stochastischen Beschreibung der Meßdaten durchgeführten statistischen Datenanalyse und der daraus resultierenden Modelle $\tilde{\Phi}$ für den Erwartungswert von $\Phi$, wird das folgende globale Modell $\tilde{F}$ für den Erwartungswert der Funktion F bestimmt:

$$\tilde{F} : \mathbf{R}^n \rightarrow \mathbf{R} \qquad (37),$$

$$x \rightarrow g\big(\tilde{\Phi}(x), x\big) \qquad (38).$$

Für konvexe Funktionen g kann man mit Hilfe der Jensenschen Ungleichung die folgende Beziehung angeben:

$$\tilde{F}(x) \leq E\big(F(x, \bullet)\big) \qquad (39),$$

d.h. $\tilde{F}$ approximiert den Erwartungswert von F von unten. Das Symbol "●" deutet an, daß die Zufallsvariable durch die Beziehung E(...) eliminiert wird.

2. Unter Verwendung des entwickelten globalen Modells können Punkte in geeigneten Umgebungen globaler Minimierer von $\tilde{F}$ durch stochastische Methoden zur globalen Minimierung (siehe [1]) berechnet werden. Diese Punkte dienen als Startpunkte für eine lokale Minimierung. Falls das betrachtete globale Modell aufgrund der Datenlage nicht hinreichend genau ist, also die Güte nicht ausreichen hoch ist, werden gezielt neue Arbeitspunkte zur Modellverbesserung ausgewertet (Experimental Design).

3. Für die lokale Minimierung ist das globale Modell $\tilde{F}$ eventuell nicht genau genug. Daher wird jeweils ein lokales Modell des Erwartungswertes von F verwendet. Für die Modellierung verwendet man wieder geeignete lineare Regressionsmodelle, wobei jetzt bevorzugt Daten der lokalen Umgebung eines aktuell betrachteten Iterationspunktes berücksichtigt werden. Ist eine zu geringe Menge lokalen Datenmaterials vorhanden, so wird dieses Datenmaterial durch gezielte Auswertung neuer Meßdaten (entsprechen Arbeitspunkten im Hinblick auf einen von den Zielfunktionen aufgespannten Parameterraum) geeignet erweitert (Experimental Design). Die zu verwendenden Strategien zur gezielten Erweiterung des Datenmaterials hängen unter anderem von den zur Wahl stehenden lokalen Optimierungsverfahren ab. Als Optimierungsverfahren kommen in Frage:

3.1. Simplexgestützte Optimierungsprozeduren (siehe [2]), die nur Zielfunktionswerte verwenden.

3.2. Gradientengestützte Optimierungsprozeduren.

3.3. Prozeduren, die basierend auf der Idee der simplex gestützten Algorithmen zusätzlich Gradienteninformation verwenden. Mit den erweiterten Daten kann somit der nächste lokale Optimierungsschritt ausgeführt werden (Online-Optimierung).

Durch Verwendung spezieller Kleinstquadratschätzer (etwa Kalmann-Filter, siehe [3]) mit Ausreißeridentifikation können alle verwendeten Modelle online adaptiv verbessert werden.

Spezielle Fragestellungen können zu Vektoroptimierungsproblemen führen. Das Ziel der Anlagensteuerung wird dabei durch eine vektorwertige Funktion $\hat{F}$ bestimmt:

$$\hat{F} : \mathbf{R}^n \times \Omega \to \mathbf{R}^d \qquad (40),$$

$$(x, \omega) \to \hat{g}\big(\Phi(x, \omega), x\big) \qquad (41)$$

mit einer zu wählenden vektorwertigen Funktion $\hat{g}$ gemäß

$$\hat{g} : \mathbf{R}^m \times \mathbf{R}^n \to \mathbf{R}^d \qquad (42),$$

$$(\eta, x) \to \hat{g}(\eta, x) \qquad (43).$$

Analog zu skalarwertigen Optimierungsproblemen können Vektoroptimierungsprobleme durch entsprechendes dreistufiges Vorgehen behandelt werden.

DEFINITION PROBLEMSPEZIFISCHER ZIELFUNKTIONEN (Fall d=1)

In vorausgegangenen Abschnitt wurde die Struktur möglicher Zielfunktionen beschrieben. Für konkrete Fragestellungen müssen konkrete Funktionen g definiert werden. Eine mögliche Wahl von g lautet wie folgt:

$$g : \mathbf{R}^m \times \mathbf{R}^n \to \mathbf{R} \qquad (44),$$

$$(\eta, x) \to (\eta - \hat{\eta})^T G_1(\eta - \hat{\eta}) + (x - \hat{x})^T G_2(x - \hat{x}) \qquad (45),$$

wobei $G_1$ und $G_2$ positiv (semi-)definite Matrizen darstellen. Diese Funktion wird folgendermaßen interpretiert:

1. Ein vektor $\hat{\eta}$ beschreibt einen gewünschten Anlagezustand. Gesucht ist ein Punkt x, für den die Anlage möglichst genau den gewünschten Zustand annimmt. Dieser Vektor $\hat{\eta}$ wird vom Anlagen-Operator (in Form von Abweichungen vom Ist-Zustand) vorgegeben, ist daneben aber auch automatisch vorgebbar.

2. Es gibt Anlagenzustände, die unter allen Umständen vermieden werden müssen. Daher ist man darauf angewiesen, Stellgrößen x zu wählen, die nicht zu weit von unproblematischen Stellgrößen entfernt sind. In der obigen Funktion wird eine spezielle unproblematische Stellgröße $\hat{x}$ berücksichtigt.

3. Zusätzliche Restriktionen können durch Straf-Terme additiv in die Funktion g eingebracht werden. Ein Beispiel hierfür lautet wie folgt:

Die Funktion g soll minimiert werden, wobei die Nebenbedingungen

$$h(x) = 0 \quad \text{und} \quad k(x) \leq 0$$

zu berücksichtigen sind. Dies erfolgt insbesondere durch Minimierung des folgenden Terms:

$$g + \mu_1 \cdot h^2(x) + \mu_2 \cdot k^4(x).$$

Literaturverzeichnis:

[1] Stefan Schäffler: "Global Optimization Using Stochastic Integration", Theorie und Forschung: Mathematik, S. Roderer Verlag, Regensburg, 1995, Seiten 19-48.

[2] T. F. Sturm: Ein Quasi-Newton-Verfahren durch Hermite-Interpolation, Dissertation, Technische Universität München, 1991.

[3] Gerald J. Bierman: "Factorization Methods for Discrete Sequential Estimation", Mathematics in Science and Engineering, Volumen 128, Academic Press, New York, 1977, Seiten 5-6.

**Patentansprüche**

**1.** Verfahren zum Entwurf eines technischen Systems,

a) bei dem Messdaten eines vorgegebenen Systems anhand eines Ersatzmodells beschrieben werden (Schritt 101);
b) bei dem eine Maßzahl für die Güte des Ersatzmodells ermittelt wird, indem die Messdaten des vorgegebenen Systems mit durch das Ersatzmodell bestimmten Daten verglichen werden (Schritt 102);
c) bei dem das Ersatzmodell dahingehend angepasst wird, dass es eine möglichst hohe Maßzahl für die Güte aufweist (Schritt 103);
d) bei dem die Maßzahl für die Güte des Ersatzmodells **dadurch** verbessert wird, dass zusätzliche Messdaten des vorgegebenen Systems ermittelt werden und das Ersatzmodell mittels dieser zusätzlichen Messdaten an das vorgegebene System genauer angepasst wird;
e) bei dem das hinsichtlich seiner Güte angepasste Ersatzmodell zum Entwurf des technischen Systems eingesetzt wird (Schritt 104);
**dadurch gekennzeichnet, dass**
f) die Messdaten nach deren Güte, bezogen auf deren Abweichung von den durch das Ersatzmodell bestimmten Daten, sortiert werden und eine vorgegebene Anzahl von n% schlechtesten Messdaten aussortiert werden.

**2.** Verfahren nach Anspruch 1,

bei dem das Ersatzmodell ein Regressionsmodell ist.

**3.** Verfahren nach einem der vorhergehenden Ansprüche,
bei dem das Ersatzmodell für eine weitere Erhöhung der Maßzahl der Güte verfeinert wird, indem mindestens ein vorgebbarer Teilbereich des Ersatzmodells lokal angepasst wird.

**4.** Verfahren nach einem der vorhergehenden Ansprüche,
bei dem die zusätzlichen Messdaten in einer vorgegebenen Umgebung der Messdaten ermittelt werden, wo ein Absolutwert einer Abweichung der Messdaten von den Daten des Ersatzmodells einen Maximalwert überschreitet.

**5.** Verfahren nach einem der vorhergehenden Ansprüche,
bei dem die Güte anhand einer quadratischen Abweichung der Messdaten von den durch das Ersatzmodell bestimmten Daten ermittelt wird.

**6.** Verfahren nach einem der vorhergehenden Ansprüche,
bei dem die Menge der Messdaten im Rahmen einer Vorverarbeitung reduziert wird.

**7.** Verfahren nach Anspruch 6,
bei dem die Vorverarbeitung eine Klasseneinteilung der Messdaten umfasst.

**8.** Verfahren nach einem der vorhergehenden Ansprüche, bei dem mittels eines Entwurfs gewonnene Daten des hinsichtlich seiner Güte angepassten Ersatzmodells zu einer Steuerung des technischen Systems eingesetzt werden.

**9.** Verfahren nach Anspruch 8,
zu einer Online-Anpassung der Steuerung des technischen Systems.

**10.** Anordnung zum Entwurf eines technischen Systems,
mit einer Prozessoreinheit, die derart eingerichtet ist, dass

a) Messdaten eines vorgegebenen Systems anhand eines Ersatzmodells beschreibbar sind;
b) eine Maßzahl für die Güte des Ersatzmodells ermittelbar ist, indem die Messdaten des vorgegebenen Systems mit durch das Ersatzmodell bestimmten Daten verglichen werden;
c) aus der Maßzahl für die Güte das Ersatzmodell dahingehend anpassbar ist, dass es eine möglichst hohe Güte aufweist;
d) die Maßzahl für die Güte des Ersatzmodells **dadurch** verbesserbar ist, dass zusätzliche Messdaten des vorgegebenen Systems ermittelt werden und das Ersatzmodell mittels dieser zusätzlichen Messdaten an das vorgegebene System genauer angepasst wird;
e) das hinsichtlich seiner Güte angepasste Ersatzmodell zum Entwurf des technischen Systems einsetzbar ist;
**dadurch gekennzeichnet, dass** die Anordnung weiterhin derart eingerichtet ist, dass
f) die Messdaten nach deren Güte, bezogen auf deren Abweichung von den durch das Ersatzmodell bestimmten Daten, sortiert werden und eine vorgegebene Anzahl von n% schlechtesten Messdaten aussortiert werden.

**Claims**

**1.** Method for designing a technical system,

a) wherein measured data of a specified system is described with the aid of an equivalent model (step 101);
b) wherein a metric for the quality of the equivalent model is determined by comparing the measured data of the specified system with data determined by means of the equivalent model (step 102);
c) wherein the equivalent model is adapted such that it has a maximally high metric for the quality (step 103);
d) wherein the metric for the quality of the equivalent model is improved by determining additional measured data of the specified system and the equivalent model is adapted using said additional measured data so as to match it more precisely to the specified system;
e) wherein the equivalent model adapted in terms of its quality is used for designing the technical system (step 104);
**characterised in that**

f) the measured data is sorted according to its quality, referred to its deviation from the data determined by means of the equivalent model, and a specified amount of n% of the worst measured data is filtered out.

**2.** Method according to claim 1,
wherein the equivalent model is a regression model.

**3.** Method according to one of the preceding claims,
wherein the equivalent model is refined in order to achieve a further increase in the metric for the quality by locally adapting at least one specifiable sub-region of the equivalent model.

**4.** Method according to one of the preceding claims,
wherein the additional measured data is determined in a specifiable environment of the measured data, where an absolute value of a deviation of the measured data from the data of the equivalent model exceeds a maximum value.

**5.** Method according to one of the preceding claims,
wherein the quality is determined on the basis of a quadratic deviation of the measured data from the data determined by means of the equivalent model.

**6.** Method according to one of the preceding claims,
wherein the volume of the measured data is reduced in a pre-processing step.

**7.** Method according to claim 6,
wherein the pre-processing includes a classification of the measured data.

**8.** Method according to one of the preceding claims,
wherein data acquired by means of a design and associated with the equivalent model adapted in terms of its quality is used for controlling the technical system.

**9.** Method according to claim 8,
for online adaptation of the control of the technical system.

**10.** Arrangement for designing a technical system,
having a processor unit which is configured in such a way that

a) measured data of a specified system can be described with the aid of an equivalent model;
b) a metric for the quality of the equivalent model can be determined by comparing the measured data of the specified system with data determined by means of the equivalent model;
c) from the metric for the quality the equivalent model can be adapted such that it has a maximally high quality;
d) the metric for the quality of the equivalent model can be improved by determining additional measured data of the specified system and adapting the equivalent model by means of said additional measured data so as to match the specified system more precisely;
e) the equivalent model updated in terms of its quality can be used for designing the technical system;
**characterised in that** the arrangement is additionally configured in such a way that
f) the measured data is sorted according to its quality, referred to its deviation from the data determined by means of the equivalent model, and a specified amount of n% of the worst measured data is filtered out.

**Revendications**

**1.** Procédé de conception d'un système technique dans lequel :

a) des données de mesures d'un système prédéterminé sont décrites à l'aide d'un modèle de remplacement (étape 101) ;
b) un indice de mesure pour la qualité du modèle de remplacement est déterminé par comparaison des données de mesures du système prédéterminé avec des données déterminées par le modèle de remplacement (étape 102) ;
c) le modèle de remplacement est adapté en ce sens qu'il présente un indice de mesure pour la qualité aussi élevé que possible (étape 103) ;

d) l'indice de mesure pour la qualité du modèle de remplacement est amélioré par détermination de données de mesures additionnelles du système prédéterminé et par adaptation exacte, au moyen de ces données de mesures additionnelles, du modèle de remplacement au système prédéterminé ;

e) le modèle de remplacement adapté quant à sa qualité est mis en oeuvre pour la conception du système technique (étape 104) ;

**caractérisé en ce que**

f) les données de mesures sont triées en fonction de leur qualité en rapport avec leur écart par rapport aux données déterminées par le modèle de remplacement, et un nombre prédéterminé de n % de données de mesures les plus mauvaises sont éliminées.

2. Procédé selon la revendication 1, dans lequel le modèle de remplacement est un modèle de régression.

3. Procédé selon l'une des revendications précédentes, dans lequel le modèle de remplacement est affiné, pour encore augmenter l'indice de mesure pour la qualité, par adaptation locale d'au moins une sous-partie prédéterminable du modèle de remplacement.

4. Procédé selon l'une des revendications précédentes, dans lequel les données de mesures additionnelles sont déterminées dans un environnement prédéterminé des données de mesures où une valeur absolue d'un écart entre les données de mesures et les données du modèle de remplacement dépasse une valeur maximale.

5. Procédé selon l'une des revendications précédentes, dans lequel la qualité est déterminée à l'aide d'un écart au carré des données de mesures par rapport aux données déterminées par le modèle de remplacement.

6. Procédé selon l'une des revendications précédentes, dans lequel l'ensemble des données de mesures est réduit dans le cadre d'un prétraitement.

7. Procédé selon la revendication 6, dans lequel le prétraitement inclut une répartition des données de mesures en classes.

8. Procédé selon l'une des revendications précédentes, dans lequel des données du modèle de remplacement adapté quant à sa qualité, obtenues au moyen d'un concept, sont mises en oeuvre en vue d'une commande du système technique.

9. Procédé selon la revendication 8 pour une adaptation en ligne de la commande du système technique.

10. Dispositif de conception d'un système technique, comportant une unité de processeur qui est aménagée de manière telle que :

a) des données de mesures d'un système prédéterminé peuvent être décrites à l'aide d'un modèle de remplacement ;

b) un indice de mesure pour la qualité du modèle de remplacement peut être déterminé par comparaison des données de mesures du système prédéterminé avec des données déterminées par le modèle de remplacement ;

c) le modèle de remplacement peut être adapté, sur la base de l'indice de mesure pour la qualité, en ce sens qu'il présente une qualité aussi élevée que possible ;

d) l'indice de mesure pour la qualité du modèle de remplacement peut être amélioré par détermination de données de mesures additionnelles du système prédéterminé et par adaptation exacte, au moyen de ces données de mesures additionnelles, du modèle de remplacement au système prédéterminé ;

e) le modèle de remplacement adapté quant à sa qualité peut être mis en oeuvre pour la conception du système technique ;

**caractérisé en ce que** le dispositif est en outre aménagé de manière telle que :

f) les données de mesures sont triées en fonction de leur qualité en rapport avec leur écart par rapport aux données déterminées par le modèle de remplacement, et un nombre prédéterminé de n % de données de mesures les plus mauvaises sont éliminées.

**FIG 1**

Meßdaten → Ersatzmodell — 101

Maßzahl für Güte des Ersatzmodells bestimmen — 102

Güte maximieren — 103

Entwurf des technischen Systems — 104

105 — Neuentwurf

Anpassung — 106

**FIG 2**

$O_2$  CO  $NO_x$  $SO_2$

Steam Generation

Tertiary Air
Liquor Guns
204

204

Back Flow

Back Flow

Brennkammer
203

Secondary Air

Primary Air

Char Bed

202

201

$Na_2S$  $Na_2CO_3$  $Na_2SO_4$

# FIG 3

| | Eingangsgrößen | |
|---|---|---|
| | Meßgröße | Beschreibung |
| 1 | FI   7081 | BL Flow |
| 2 | QI   7082 A | Dry Solids Content |
| 3 | FIC 7280 X | PA Primary Air |
| 4 | FIC 7281 X | SA Secondary Air |
| 5 | FIC 7282 X | TA Tertiary Air |
| 6 | PI   7283 | PA Pressure |
| 7 | PI   7284 | SA Pressure |
| 8 | PHI 7285 | TA Pressure |
| 9 | TIC  7288 X | PA Temperature |
| 10 | TIC  7289 X | SA Temperature |
| 11 | PIC 7305 X | Press Induced Draft |
| 12 | HO  7338 | Oil Valve |
| 13 | TI   7347 | BL Temperature |
| 14 | PIC 7349 X | BL Front Pressure |
| 15 | PIC 7351 X | BL Back Pressure |

# FIG 4

| | Stellgrößen | |
|---|---|---|
| | Meßgröße | Beschreibung |
| 1 | FIC  7280 X | PA Primary Air |
| 2 | FIC  7281 X | SA Secondary Air |
| 3 | FIC  7282 X | TA Tertiary Air |
| 4 | PIC  7349 X | BL Front Pressure |

# FIG 5

| Ausgangsgrößen | | |
|---|---|---|
| | Meßgröße | Beschreibung |
| 1 | TIC 7249 X | Steam Temperature |
| 2 | FI 7250 | Steam Production |
| 3 | QI 7322 | $O_2$ |
| 4 | TI 7323 | Smoke Temperature |
| 5 | QI 7331 | $H_2S$ |
| 6 | QI 7332 | $SO_2$ |
| 7 | QIC 7333 X | $CO$ |
| 8 | QIC 7370 X | Spec. Weight of Green Liquor |
| 9 | QI 7531 | $NO$ |
| 10 | IBM 8096 | Reduction Efficiency |
| 11 | IBM 8109 | PH Value |
| 12 | TI 7352 | Bed Temperature |
| 13 | IBM 8015 | $NaOH$ |
| 14 | IBM 8016 | $Na_2S$ |
| 15 | IBM 8017 | $Na_2CO_3$ |

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4358822 A
- WO 9827474 A
- US 5687077 A

### In der Beschreibung aufgeführte Nicht-Patentliteratur

- **Stefan Schäffler ; Theorie ; Forschung.** Global Optimization Using Stochastic Integration. S. Roder-er Verlag, 1995, 19-48
- **T. F. Sturm.** Ein Quasi-Newton-Verfahren durch Her-mite-Interpolation. *Dissertation,* 1991
- Factorization Methods for Discrete Sequential Esti-mation. **Gerald J. Bierman.** Mathematics in Science and Engineering. Academic Press, 1977, vol. 128, 5-6